# EUROPÄISCHE PATENTSCHRIFT

(11) **EP 4 479 265 B1**
(45) Veröffentlichungstag und Bekanntmachung des Hinweises auf die Patenterteilung: **11.03.2026**
(21) Anmeldenummer: 23724743.2
(22) Anmeldetag: 03.05.2023
(51) Int. Cl.: B60K 35/00, B60K 35/10, B60K 35/22, B60K 35/40, B60K 35/60

(54) **ANZEIGEVORRICHTUNG MIT EINEM IN EINEM KEILFÖRMIGEN ABSCHNITT GEBILDETEN ÜBERGANG ZUR ABLENKUNG EINES EINE ANZEIGE VERFÄLSCHENDEN LICHTS**
DISPLAY DEVICE WITH A TRANSITION FORMED IN A WEDGE-SHAPED SECTION FOR DEFLECTING A LIGHT DISTURBING A DISPLAY
DISPOSITIF D'AFFICHAGE AVEC UNE TRANSITION FORMÉE DANS UNE SECTION EN FORME DE COIN POUR DÉVIER UNE LUMIÈRE QUI ALTÈRE UN AFFICHAGE

(30) Priorität: 29.11.2022 DE 102022131598
(43) Veröffentlichungstag der Anmeldung: 25.12.2024
(73) Patentinhaber: Marquardt GmbH, 78604 Rietheim-Weilheim (DE)
(72) Erfinder: HAKE, Felix, 78048 Villingen-Schwenningen (DE); KÄFER, Wolfgang, 78166 Donaueschingen (DE); WEISSER, Dietmar, 78532 Tuttlingen (DE)
(74) Vertreter: Staeger & Sperling Partnerschaftsgesellschaft mbB
(86) Internationale Anmeldenummer: PCT/EP2023/061661
(87) Internationale Veröffentlichungsnummer: WO 2024/114949

(56) Entgegenhaltungen:
- EP-A1- 3 045 944
- WO-A1-2022/053169
- US-A- 5 528 720

## Beschreibung

Die Erfindung betrifft eine Anzeigevorrichtung zur Anzeige von Informationen für eine ein Bedienelement aufweisende Handhabe eines Kraftfahrzeugs. Aus dem Stand der Technik ist eine Vielzahl von Anzeigevorrichtungen bekannt, in welche Bedienelemente eingebettet sind bzw. welche Bedienelemente aufweisen. Darunter sind teilweise auch Anzeigevorrichtungen mit optischen Körpern an welchen eine Anzeige ablesbar ist.

EP 3 045 944 A1 offenbart eine Anzeigevorrichtung eines Kraftfahrzeugs, aufweisend eine Lichtleitvorrichtung.

Ist ein Bedienelement in den optischen Körper eingebettet, kann es dazu kommen, dass die Kanten einer Ausnehmung zur Einbettung des Bedienelements bzw. die Ausnehmung oder das Bedienelement auf eine durch den optischen Körper gebildete Anzeigefläche reflektiert werden und damit an der Anzeigefläche sichtbar sind, was durch den Betrachter als störend empfunden werden kann und in den meisten Fällen auch die Ablesbarkeit einer solchen Anzeigevorrichtung verschlechtert.

Der Erfindung liegt deshalb die Aufgabe zugrunde, die vorgenannten Nachteile zu überwinden und eine Anzeigevorrichtung bereitzustellen, an dessen von einem optischen Körper bereitgestellter Anzeigefläche Reflektionen von in den optischen Körper eingebetteten Elementen oder von Ausnehmungen in dem optischen Körper minimiert werden.

Diese Aufgabe wird durch die Merkmalskombination gemäß Patentanspruch 1 gelöst.

Erfindungsgemäß wird daher eine Anzeigevorrichtung zur Anzeige von Informationen für eine ein Bedienelement aufweisende Handhabe eines Kraftfahrzeugs vorgeschlagen. Alternativ kann das Bedienelement auch als Teil der Anzeigevorrichtung gesehen werden, sodass es sich also auch um eine Anzeigevorrichtung mit einem Bedienelement handeln kann. Die vorgeschlagene Anzeigevorrichtung weist einen optischen Körper mit einer in einer ersten Ebene liegenden Anzeigefläche und einer in einer zweiten Ebene liegenden Reflektionsfläche auf. Weiter weist die Anzeigevorrichtung eine die erste Ebene schneidende bzw. in dieser mündende und insbesondere zu dem Bedienelement korrespondierende Ausnehmung auf, welche vorzugsweise in der ersten Ebene eine Öffnung zur Aufnahme des Bedienelements bestimmt. Die erste Ebene und die zweite Ebene schneiden einander einen keilförmigen Abschnitt bildend. Der optische Körper bestimmt in dem keilförmigen Abschnitt einen Übergang zwischen der Anzeigefläche und der Reflektionsfläche. Erfindungsgemäß ist hierbei vorgesehen, dass der Übergang ausgebildet ist, an der Ausnehmung in Richtung des keilförmigen Abschnitts eingekoppeltes Licht, insbesondere welches aufgrund der durch die erste und zweite Ebene gebildeten Keilform ohne den Übergang an der Reflektionsfläche zu der Anzeigefläche reflektiert werden würde, nicht oder zumindest nicht vollständig zu der Anzeigefläche zu lenken. Hierfür kann zumindest ein Teil des Lichts an dem Übergang abhängig von einem Abstrahlwinkel des Lichts gegenüber einer Lotrechten in der geometrischen Mitte einer im Weiteren definierten ersten Einkoppelfläche von der Anzeigefläche und/oder der ersten Ebene weg gelenkt, die Anzeigefläche nicht treffend in die erste Ebene gelenkt oder aus dem optischen Körper ausgekoppelt werden.

Dies gilt vorzugsweise für ein Licht mit einem Abstrahlwinkel von -20° bis +20° und weiter insbesondere von -10° bis +10° um die Lotrechte.

Der Übergang kann vorzugsweise durch zumindest eine Fase und/oder zumindest eine Abkantung und/oder zumindest eine Abrundung gebildet werden, welche jedoch insbesondere in ihrer Proportion bzw. in ihren Proportionen so ausgebildet sind, dass das von der Ausnehmung her auf sie treffende Licht nicht in Richtung der Anzeigefläche oder zumindest nicht an der Anzeigefläche aus dem optischen Körper austretend reflektiert wird.

Vorzugsweise ist vorgesehen, dass der optische Körper an einer zu dem keilförmigen Abschnitt, bzw. an einer zu der Schnittlinie der ersten und der zweiten Ebene weisenden Seite der Ausnehmung eine erste Einkoppelfläche aufweist, an welcher Licht in den optischen Körper einkoppelbar ist. Dadurch ergibt sich eine ästhetische Optik, welche jedoch dazu führen kann, dass die Seite der Ausnehmung oder ein darin angeordnetes Bedienelement an der Anzeigefläche sichtbar ist, was jedoch vermieden werden soll bzw. durch die oben genannten Maßnahmen vermieden werden kann.

Eine weitere Variante sieht vor, dass der Übergang aus zwei Fasen bzw. Abkantungen gebildet ist, von welchen eine an die Reflektionsfläche angrenzende erste Fase/Abkantung eine Fläche parallel der ersten Einkoppelfläche bestimmt und eine an die Anzeigefläche angrenzende zweite Fase/Abkantung eine Fläche schräg zu der ersten Einkoppelfläche bestimmt.

Beispielsweise kann vorgesehen sein, dass ein in einem Winkel von -20° bis 20° und insbesondere -10° bis 10° um eine Lotrechte der ersten Einkoppelfläche eingestrahltes Licht auf den Übergang und somit nicht auf die Reflektionsfläche trifft, wobei die Lotrechte vorzugsweise in einer geometrischen Mitte der ersten Einkoppelfläche steht.

Dabei ist vorzugsweise vorgesehen, dass die erste Fase/Abkantung größer der zweiten Fase/Abkantung ist und/oder die erste Fase/Abkantung unmittelbar an die zweite Fase/Abkantung angrenzt.

Sowohl für die erste als auch für die zweite Fase/Abkantung gilt, dass diese zur Vermeidung einer Verletzungsgefahr ausreichend groß und in einem ausreichend stumpfen Winkel zueinander und den angrenzenden Flächen ausgebildet werden, sodass sich also ein Bediener des Bedienelements nicht an den Fasen/Abkantung oder allgemein dem optischen Körper schneiden kann.

Vorzugsweise erstreckt sich die Anzeigefläche in der ersten Ebene von einer zu dem keilförmigen Abschnitt weisenden Seite der Ausnehmung bis zu dem Übergang, nimmt also im Wesentlichen die gesamte in der ersten Ebene liegende Oberfläche des optischen Körpers von der Ausnehmung bis zu dem Übergang ein.

Der optische Körper weist zudem besonders bevorzugt in einer dritten Ebene eine zweite Einkoppelfläche auf, an welcher ein Licht zur Informationsanzeige an der Anzeigefläche einkoppelbar ist, welches von der Einkoppelfläche kommend an der Reflektionsfläche zu der Anzeigefläche umgelenkt wird und dort für den Betrachter entsprechend sichtbar wird.

Bei dem optischen Körper handelt es sich vorzugsweise um einen optischen Kristall, d.h. um einen starren Körper, welcher ausgebildet ist, ein zur Anzeige an der zweiten Einkoppelfläche eingekoppeltes Licht genau einmal an der Reflektionsfläche zu der Anzeigefläche umzulenken, sodass eine durch das Licht an der Einkoppelfläche in den optischen Kristall eingebrachte Information für den Betrachter an der Anzeigefläche sichtbar wird.

Weiter kann die Anzeigevorrichtung ein an der zweiten Einkoppelfläche vorgesehenes Anzeigeelement aufweisen, welches ausgebildet ist, an der zweiten Einkoppelfläche ein Licht zur Informationsanzeige an der Anzeigefläche einzukoppeln, welches an der Reflektionsfläche zu der Anzeigefläche umgelenkt wird.

Da die Anzeigevorrichtung oftmals an dem optischen Körper und/oder der optische Körper an einem angrenzenden Träger befestigt werden muss, kann die Anzeigevorrichtung bzw. der optische Körper insbesondere an seiner die dritte Ebene bestimmenden Seite Befestigungselemente oder Befestigungsschnittstellen aufweisen, welche durch eine entsprechende Reflektion störend an der Anzeigefläche sichtbar sein können. Hinzukommt, dass das Anzeigeelement in der dritten Ebene einen Bereich des optischen Körpers abgrenzt, sodass diese Grenzen, beispielsweise Displayränder, insbesondere in einem abgeschalteten Zustand deutlich an der Anzeigefläche sichtbar sein können. Da also an der Einkoppelfläche insbesondere in einem Zustand, in welchem das Anzeigeelement abgeschaltet ist, unterschiedliche Farbabstufungen oder Kanten vorhanden sind, kann der optische Körper bzw. der optische Kristall für den Betrachter weniger "brillant" wirken, da die Farbabstufungen oder Kanten an der Anzeigefläche unter Umständen deutlich sichtbar werden.

Um dies zu vermeiden, kann der optische Körper in der dritten Ebene eine die zweite Einkoppelfläche zumindest abschnittsweise randförmig umgebende Randfläche aufweisen, welche eine Außenkante des Anzeigeelements und/oder einen Befestigungsabschnitt des Anzeigeelements und/oder eine Außenkante eines Displays des Anzeigeelements und/oder eine Außenkante eines Licht erzeugenden Abschnitts des Anzeigeelements und/oder einen Befestigungsabschnitt des optischen Körpers überdeckt. Vorzugsweise erstreckt sich die Randfläche von dem Anzeigeelement nach außen bis zu einer in der dritten Ebene liegenden Außenkante / Außenkontur des optischen Körpers.

Weiter ist dabei vorzugsweise vorgesehen, dass der optische Körper in der Randfläche bzw. über die gesamte Randfläche mit einer nicht blickdichten und/oder, zumindest von dem optischen Körper aus gesehen, spiegelnden Beschichtung zur Kaschierung der Randfläche bzw. zur Kaschierung der Außenkante des Anzeigeelements und/oder des Befestigungsabschnitts des Anzeigeelements und/oder der Außenkante des Display des Anzeigeelements und/oder der Außenkante des Licht erzeugenden Abschnitts des Anzeigeelements und/oder des Befestigungsabschnitts des optischen Körpers versehen ist. Weiter kann auch die gesamte (zweite) Einkoppelfläche bzw. der gesamte optische Körper im Bereich der dritten Ebene mit einer Beschichtung versehen sein, welche an ihrer zu dem optischen Körper weisenden Seite spiegelnd aber an der von dem optischen Körper abgewandten Seite lichtdurchlässig ist.

Die Beschichtung kann zumindest eine Schicht aufweisen d.h. mehrschicht ausgeführt sein. Weiter kann die Beschichtung eine aufgedampfte Metallschicht, wie zum Beispiel Aluminium oder Silber, und/oder ein optischer Resonator sein, welcher insbesondere aus mehreren alternierenden Schichten zur Phasenverschiebung eines von dem optischen Körper her einfallenden Lichts um λ/2 oder einem Vielfachen davon gebildet ist. Bei solchen alternierenden Schichten kann es sich beispielsweise um Schichten aus Indium-Zinn-Oxid (ITO) handeln.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Lenkhandhabe eines Kraftfahrzeugs mit einer Anzeigevorrichtung;
- Fig. 2: eine Prinzipskizze einer Anzeigevorrichtung;
- Fig. 3a: eine herkömmliche Anzeigevorrichtung in einer perspektivischen Ansicht;
- Fig. 3b: die herkömmliche Anzeigevorrichtung in einer Draufsicht;
- Fig. 4a: eine erfindungsgemäße Anzeigevorrichtung in einer perspektivischen Ansicht;
- Fig. 4b: die erfindungsgemäße Anzeigevorrichtung in einer Draufsicht;
- Fig. 5a-e: eine herkömmliche Anzeigevorrichtung bei verschiedenen Abstrahlwinkeln eines eingekoppelten Lichts;
- Fig. 6a-e: eine erfindungsgemäße Anzeigevorrichtung bei verschiedenen Abstrahlwinkeln eines eingekoppelten Lichts;
- Fig. 7: eine erfindungsgemäße Anzeigevorrichtung mit Anzeigeelement und beschichteter Randfläche.

Die Figuren sind beispielhaft schematisch. Gleiche Bezugszeichen in den Figuren weisen auf gleiche funktionale und/oder strukturelle Merkmale hin.

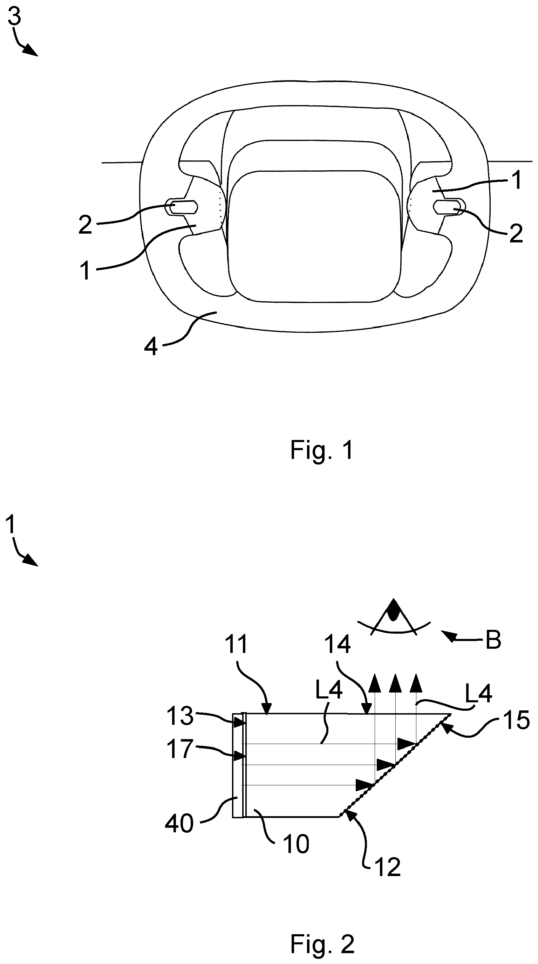

In Figur 1 ist eine Lenkhandhabe 3 eines Kraftfahrzeugs dargestellt, in dessen Lenkkranz 4 beidseitig jeweils eine Anzeigevorrichtung 1 eingebettet ist und von dem Lenkkranz 4 nach radialinnen auskragt d.h. ein an dem Lenkkranz 4 fixiertes Ende und ein sich davon nach radialinnen erstreckendes freies Ende aufweist.

In einem Übergangsbereich von dem Lenkkranz 4 in die Anzeigevorrichtung 1 ist ferner jeweils ein Bedienelement 2 in Form eines Bedienrades oder Bedienknopfes vorgesehen, welcher in die Anzeigevorrichtung 1 bzw. eine im Weiteren erläuterte Ausnehmung 20 der Anzeigevorrichtung 1 eingebettet ist.

Das Funktionsprinzip einer solchen Anzeigevorrichtung 1 wird durch die Darstellung gemäß Figur 2 deutlich. Ein optischer Körper 10 und hier konkret ein optischer Kristall 10 weist in einer ersten Ebene 11 eine Anzeigefläche 14, in einer zweiten Ebene 12 eine Reflektionsfläche 15 und in einer dritten Ebene 13 eine (zweite) Einkoppelfläche 17 auf. An der (zweiten) Einkoppelfläche 17 wird von einem Anzeigeelement 40, wie beispielsweise einem Display, Licht L4 und durch das Licht L4 dargestellte Informationen bzw. Bilder in den optischen Kristall 10 eingekoppelt und in diesem an der Reflektionsfläche 15 in Richtung der Anzeigefläche 14 reflektiert bzw. umgelenkt, sodass ein Betrachter B die durch das Licht L4 dargestellten Informationen bzw. Bilder erfassen kann.

Ergänzend sei darauf hingewiesen, dass das Anzeigeelement 40 und die Seite des optischen Kristalls 10, welche die (zweite) Einkoppelfläche 17 aufweist, an dem Lenkkranz 4 bzw. einem Träger der Lenkhandhabe 3 gemäß Figur 1 fixiert sein können und die Seite des optischen Kristalls 10, an welcher die erste Ebene 11 und die zweite Ebene 12 sich keilförmig schneiden, frei ist und gegenüber der Lenkhandhabe 3 bzw. dessen Lenkkranz 4 auskragt. Dabei kann jedoch der optische Kristall 10 durchaus eine Beschichtung aufweisen, sodass beispielsweise durch eine Beschichtung der Reflektionsfläche 15 die Reflektion des Lichts im Inneren des optischen Kristalls 10 verbessert werden kann.

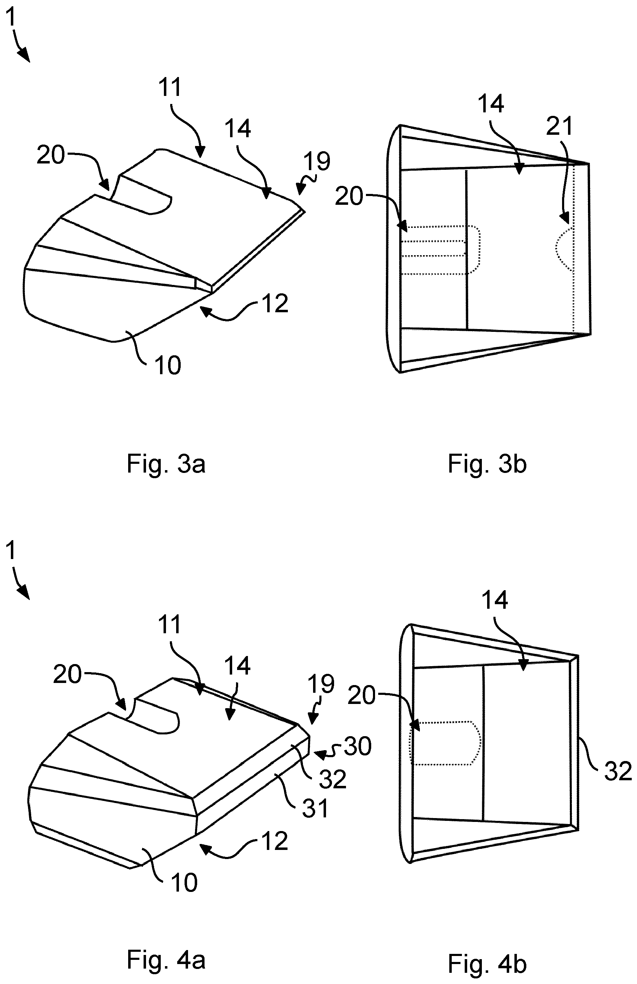

Ist jedoch, wie in den Figuren 3a und 3b, eine Ausnehmung 20 zur Aufnahme des Bedienelements 2 vorgesehen, kommt es oftmals dazu, dass auch durch die Ausnehmung 20 gebildete Kanten als Reflektion 21 an der Anzeigefläche 14 sichtbar sind, was entsprechend die Ablesbarkeit der Anzeigevorrichtung 1 verschlechtert und vom Betrachter als störend empfunden wird.

Solche störenden Reflektionen 21 können vollständig oder zumindest Großteiles durch eine erfindungsgemäße Anzeigevorrichtung 1 mit einem Übergang 30 von der Reflektionsfläche 15 zu der Anzeigefläche 14, wie es in den Figuren 4a und 4b dargestellt ist, verhindert werden.

Hierfür ist vorgesehen, dass in dem Bereich bzw. in dem keilförmigen Abschnitt 19, in welchem sich die erste Ebene 11 und die zweite Ebene 12 schneiden, ein zwei Fasen 31, 32 aufweisender Übergang 30 ausgebildet ist, durch welchen von der Ausnehmung 20 her auf den Übergang 30 bzw. dessen Fasen 31, 32 treffendes Licht den optischen Körper 10 verlassen oder von der Anzeigefläche 14 weg reflektiert werden kann.

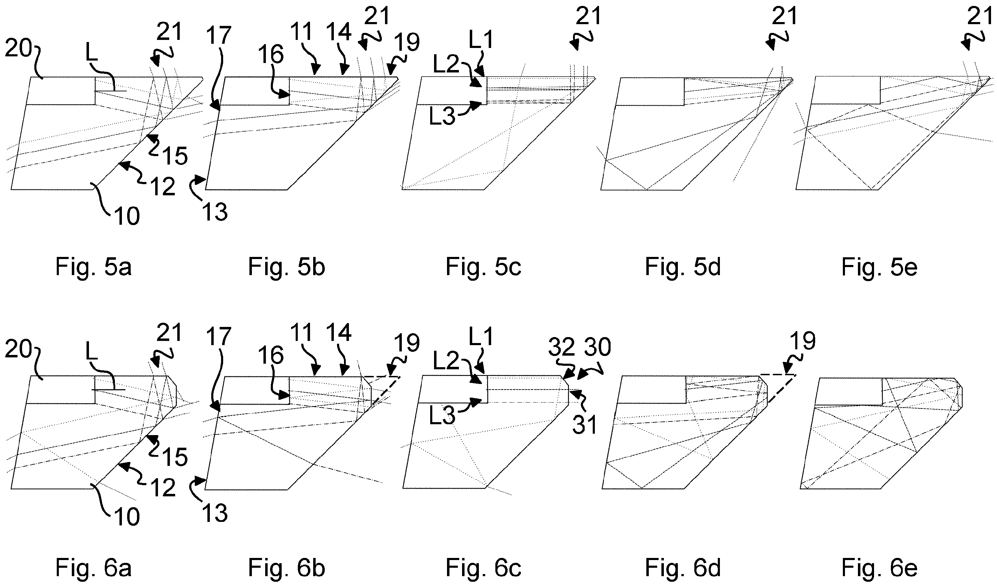

Zur Illustration sind in den Figuren 5a bis 5e Lichtwege eines an der Ausnehmung 20 eingekoppelten Lichts L1, L2, L3 bei einem keinen Übergang 30 aufweisenden optischen Körpers 10 und in den Figuren 6a bis 6e die Lichtwege in einem optischen Körper 10 mit einem Übergang 30 abgebildet.

Das Licht L1, L2, L3 bzw. dessen beispielhaft dargestellten Lichtwege L1, L2, L3 wird in den Figuren 5a, 6a in einem Winkel von -20° zu der Lotrechten L, in den Figuren 5b, 6b in einem Winkel von -10° zu der Lotrechten L, in den Figuren 5c, 6c in einem Winkel von 0° zu der Lotrechten L, in den Figuren 5d, 6d in einem Winkel von 10° zu der Lotrechten L und in den Figuren 5e, 6e in einem Winkel von 20° zu der Lotrechten L in den optischen Körper 10 eingekoppelt.

Dabei entspricht der Lichtpfad L1 jeweils dem Lichtpfad des in die erste Einkoppelfläche 16 an der ersten Ebene 11 eingekoppelten Lichts, der Lichtpfad L2 jeweils dem Lichtpfad des an der Lotrechten in der geometrischen Mitte der ersten Einnkoppelfläche 16 eingekoppelten Lichts und der Lichtpfad L3 jeweils dem Lichtpfad des an der in dem optischen Kristall 10 liegenden Kante der Ausnehmung 20 eingekoppelten Lichts. Die Lichtpfade L1, L2, L3 bzw. das Licht L1, L2, L3 stehen dabei nur selbstverständlich nur stellvertretend und illustrierend für das über die gesamte erste Einkoppelfläche 16 eingekoppelte bzw. einkoppelbare Licht.

Der Übersichtlichkeit halber sind nicht alle Merkmale in allen Figuren 5, 6 mit Bezugszeichen versehen, wobei die Merkmale der Ausführungsform gemäß den Figuren 5 in allen Figuren 5 und die Merkmale der Ausführungsform gemäß den Figuren 6 in allen Figuren 6 vorhanden sind.

In den Figuren 5 ist durch das Licht L1, L2, L3 bzw. durch die dargestellten beispielhaften Lichtwege L1, L2, L3 deutlich zu erkennen, dass das an der ersten Einkoppelfläche 26 eingekoppelte Licht L1, L2, L3 für alle Winkel -20° bis 20° an der Anzeigefläche 14 zu Reflektionen 21 führt.

Durch den Übergang 30, wie er in der Variante gemäß den Figuren 6 dargestellt ist, können die Reflektionen 21 vollständig oder zumindest großteils verhindert werden.

Für einen Winkel von -20°, wie es in Figur 6a dargestellt ist, wird bereits nicht mehr das gesamte an der ersten Einkoppelfläche 26 eingekoppelte Licht zu der Anzeigefläche 14 reflektiert, sondern nur ein reduzierter Teil. Bei -10° kommt es, wie in Figur 6b dargestellt, bereits zu keiner Reflektion an der Anzeigefläche 14 mehr. Für die Winkel von 0°, 10° und 20° kann die Reflektion, wie in den Figuren 6c bis 6e dargestellt, vollständig verhindert werden. Hierfür weist der Übergang 30 zwei Fasen 31, 32 auf, wobei die erste Fase 31 unmittelbar an die Reflektionsfläche 15 anschließt und parallel der ersten Einkoppelfläche 16 verläuft. Die zweite Fase 32, welche auch eine Abrundung sein könnte, liegt zwischen der Anzeigefläche 14 und der ersten Fase 31 und ist derart gewählt, dass einerseits eine Schnittgefahr ausgeschlossen und andererseits das Licht in den optischen Körper 10 zurückgeworfen d.h. von der Anzeigefläche 14 weggelenkt wird.

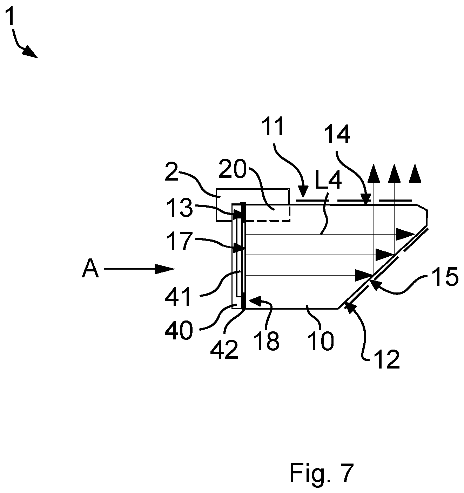

In Figur 7 ist eine Anzeigevorrichtung 1 mit einem an dem optischen Kristall 10 angeordneten Anzeigeelement 40 dargestellt, welches ausgebildet ist, Licht L4 an einer zweiten Einkoppelfläche 17 in den optischen Kristall 10 einzukoppeln. Das in einer dritten Ebene 13 eingekoppelte Licht L4 wird dann an der in der zweiten Ebene 12 liegenden Reflektionsfläche 15 auf die in der ersten Ebene 11 liegende Anzeigefläche 14 reflektiert bzw. gelenkt, um dadurch die über das Licht L4 eingekoppelten Informationen für den Betrachter sichtbar zu machen. In einem Zustand, in welchem das Display 41 des Anzeigeelements 40 abgeschaltet ist, kann es jedoch dazu kommen, dass die Displayränder an der Anzeigefläche 14 sichtbar sind. Daher ist vorgesehen, dass der optische Kristall 10 in einem Randbereich bzw. an einer Randfläche 18, welche die zweite Einkoppelfläche 17 rahmenförmig umläuft mit einer Beschichtung 42 versehen ist. Durch die Beschichtung 42 wird eine Verspiegelung gebildet, durch welche der Displayrand des Displays 41 an der Anzeigefläche 14 nicht mehr sichtbar ist und der optische Kristall 10 somit weiter und auch in einem abgeschalteten Zustand des Displays 41 "brillant" erscheint.

## Patentansprüche

1. Anzeigevorrichtung (1) zur Anzeige von Informationen für ein Kraftfahrzeug,
aufweisend einen optischen Körper (10) mit einer in einer ersten Ebene (11) liegenden Anzeigefläche (14) und einer in einer zweiten Ebene (12) liegenden Reflektionsfläche (15),
wobei die erste Ebene (11) und die zweite Ebene (12) einander einen keilförmigen Abschnitt (19) bildend schneiden,
wobei der optische Körper (10) in dem keilförmigen Abschnitt (19) einen Übergang (30) zwischen der Anzeigefläche (14) und der Reflektionsfläche (15) bestimmt, **dadurch gekennzeichnet, dass** die Anzeigevorrichtung (1) für eine ein Bedienelement (2) aufweisende Handhabe (3) des Kraftfahrzeugs geeignet ist, der optische Körper (10) weiterhin eine die erste Ebene (11) schneidende Ausnehmung (20) zur Aufnahme des Bedienelements (2) aufweist und der Übergang (30)
ausgebildet ist, an der Ausnehmung (20) in Richtung des keilförmigen Abschnitts (19) eingekoppeltes Licht (L1, L2, L3) nicht zu der Anzeigefläche (14) zu lenken.

2. Anzeigevorrichtung nach Anspruch 1,
wobei der optische Körper (10) an einer zu dem keilförmigen Abschnitt (19) weisenden Seite der Ausnehmung (20) eine erste Einkoppelfläche (16) aufweist, an welcher Licht in den optischen Körper einkoppelbar ist.

3. Anzeigevorrichtung nach Anspruch 2,
wobei der Übergang (30) aus zwei Fasen (31, 32) gebildet ist, von welchen eine an die Reflektionsfläche (15) angrenzende erste Fase (31) eine Fläche parallel der ersten Einkoppelfläche (16) bestimmt und eine an die Anzeigefläche (14) angrenzende zweite Fase (32) eine Fläche schräg zu der ersten Einkoppelfläche (16) bestimmt.

4. Anzeigevorrichtung nach dem vorhergehenden Anspruch,
wobei die erste Fase (31) größer der zweiten Fase (32) ist und/oder die erste Fase (31) unmittelbar an die zweite Fase (32) angrenzt.

5. Anzeigevorrichtung nach einem der vorhergehenden Ansprüche,
wobei sich die Anzeigefläche (14) in der ersten Ebene (11) von einer zu dem keilförmigen Abschnitt (19) weisenden Seite der Ausnehmung (20) bis zu dem Übergang (30) erstreckt.

6. Anzeigevorrichtung nach einem der vorhergehenden Ansprüche,
wobei der optische Körper (10) in einer dritten Ebene (13) eine zweite Einkoppelfläche (17) aufweist, an welcher Licht (L4) zur Informationsanzeige an der Anzeigefläche (14) einkoppelbar ist, welches von der zweiten Einkoppelfläche (17) kommend an der Reflektionsfläche (15) zu der Anzeigefläche (14) umgelenkt wird.

7. Anzeigevorrichtung nach dem vorhergehenden Anspruch,
ferner aufweisend ein an der zweiten Einkoppelfläche (17) vorgesehenes Anzeigeelement (40), welches ausgebildet ist, an der zweiten Einkoppelfläche (17) Licht (L4) zur Informationsanzeige an der Anzeigefläche (14) einzukoppeln, welches an der Reflektionsfläche (15) zu der Anzeigefläche (14) umgelenkt wird.

8. Anzeigevorrichtung nach dem vorhergehenden Anspruch,
wobei der optische Körper (10) in der dritten Ebene (13) eine die zweite Einkoppelfläche (17) zumindest abschnittsweise randförmig umgebende Randfläche (18) aufweist, welche eine Außenkante des Anzeigeelements (40) und/oder einen Befestigungsabschnitt des Anzeigeelements (40) und/oder eine Außenkante eines Display (41) des Anzeigeelements (40) und/oder eine Außenkante eines Licht erzeugenden Abschnitts des Anzeigeelements (40) und/oder einen Befestigungsabschnitt des optischen Körpers (10) überdeckt.

9. Anzeigevorrichtung nach dem vorhergehenden Anspruch,
wobei der optische Körper (10) an der Randfläche mit einer nicht blickdichten und/oder spiegelnden Beschichtung (42) zur Kaschierung der Randfläche versehen ist.

10. Anzeigevorrichtung nach dem vorhergehenden Anspruch,
wobei die Beschichtung (42) eine aufgedampfte Metallschicht und/oder ein optischer Resonator ist, welcher aus mehreren Schichten zur Phasenverschiebung eines von dem optischen Körper (10) her einfallenden Lichts um λ/2 oder einem Vielfachen davon gebildet ist.

## Claims

1. A display device (1) for displaying information for a motor vehicle,
having an optical body (10) with a display area (14) lying in a first plane (11) and a reflection area (15) lying in a second plane (12),
wherein the first plane (11) and the second plane (12) intersect each other forming a wedge-shaped section (19),
wherein the optical body (10) determines, in the wedge-shaped section (19), a transition (30) between the display area (14) and the reflection area (15), **characterised in that** the display device (1) is suitable for a handle (3) of the motor vehicle having an operating element (2), the optical body (10) further having a recess (20) intersecting the first plane (11) for receiving the operating element (2) and the transition (30) being designed to not guide light (L1, L2, L3) coupled into the recess (20) in a direction of the wedge-shaped section (19) to the display area (14).

2. The display device according to claim 1,
wherein the optical body (10) has, at a side of the recess (20) facing the wedge-shaped section (19), a first coupling area (16) at which light is able to be coupled into the optical body.

3. The display device according to claim 2,
wherein the transition (30) is formed from two chamfers (31, 32), of which a first chamfer (31) adjacent to the reflection area (15) determines an area parallel to the first coupling area (16) and a second chamfer (32) adjacent to the display area (14) determines an area oblique to the first coupling area (16).

4. The display device according to the preceding claim,
wherein the first chamfer (31) is larger than the second chamfer (32) and/or the first chamfer (31) is immediately adjacent to the second chamfer (32).

5. The display device according to any one of the preceding claims,
wherein the display area (14) extends in the first plane (11) from a side of the recess (20) facing the wedge-shaped section (19) up to the transition (30).

6. The display device according to any one of the preceding claims,
wherein the optical body (10) has a second coupling area (17) in a third plane (13), at which light (L4) for displaying information in the display area (14) is able to be coupled into, which is deflected to the display area (14) at the reflection area (15) coming from the second coupling area (17).

7. The display device according to the preceding claim,
further having a display element (40) provided at the second coupling area (17), which is designed to couple light (L4) for displaying information in the display area (14) into the coupling area (17), which is deflected to the display area (14) at the reflection area (15).

8. The display device according to the preceding claim,
wherein the optical body (10) has, in the third plane (13), an edge area (18) that at least in sections surrounds the second coupling area (17) in edge-shaped manner, which covers an outer edge of the display element (40) and/or a fastening section of the display element (40) and/or an outer edge of a display (41) of the display element (40) and/or an outer edge of a light-generating section of the display element (40) and/or a fastening section of the optical body (10).

9. The display device according to the preceding claim,
wherein the optical body (10) is provided with a non-opaque and/or reflective coating (42) at the edge area for laminating the edge area.

10. The display device according to the preceding claim,
wherein the coating (42) is a vapour-deposited metal layer and/or an optical resonator which is formed of multiple layers for phase displacement of light that is incident from the optical body (10) by λ/2 or a multiple thereof.

## Revendications

1. Dispositif d'affichage (1) pour l'affichage d'informations pour un véhicule automobile, comprenant :
un corps optique (10) présentant une surface d'affichage (14) située dans un premier plan (11) et une surface de réflexion (15) située dans un deuxième plan (12),
dans lequel le premier plan (11) et le deuxième plan (12) se coupent en formant une section en coin (19),
dans lequel le corps optique (10) définit, dans la section en coin (19), une transition (30) entre la surface d'affichage (14) et la surface de réflexion (15),
**caractérisé en ce que**
le dispositif d'affichage (1) est approprié pour un levier de commande (3) du véhicule automobile présentant un élément de commande (2),
le corps optique (10) présente en outre un évidement (20) coupant le premier plan (11) pour la réception de l'élément de commande (2), et
la transition (30) est configurée pour ne pas diriger vers la surface d'affichage (14) de la lumière (L1, L2, L3) injectée au niveau de l'évidement (20) en direction de la section en coin (19).

2. Dispositif d'affichage selon la revendication 1,
dans lequel le corps optique (10) présente, sur un côté de l'évidement (20) tourné vers la section en coin (19), une première surface d'injection (16) au niveau de laquelle de la lumière peut être injectée dans le corps optique.

3. Dispositif d'affichage selon la revendication 2,
dans lequel la transition (30) est formée de deux chanfreins (31, 32), parmi lesquels un premier chanfrein (31) adjacent à la surface de réflexion (15) définit une surface parallèle à la première surface d'injection (16), et un second chanfrein (32) adjacent à la surface d'affichage (14) définit une surface inclinée par rapport à la première surface d'injection (16).

4. Dispositif d'affichage selon la revendication précédente,
dans lequel le premier chanfrein (31) est plus grand que le second chanfrein (32) et/ou le premier chanfrein (31) est directement adjacent au second chanfrein (32).

5. Dispositif d'affichage selon l'une quelconque des revendications précédentes, dans lequel la surface d'affichage (14) s'étend dans le premier plan (11) depuis un côté de l'évidement (20) tourné vers la section en coin (19) jusqu'à la transition (30).

6. Dispositif d'affichage selon l'une quelconque des revendications précédentes, dans lequel le corps optique (10) présente, dans un troisième plan (13), une seconde surface d'injection (17) au niveau de laquelle de la lumière (L4) pour l'affichage d'informations sur la surface d'affichage (14) peut être injectée, laquelle lumière, provenant de la seconde surface d'injection (17), est déviée au niveau de la surface de réflexion (15) vers la surface d'affichage (14).

7. Dispositif d'affichage selon la revendication précédente,
comprenant en outre un élément d'affichage (40) prévu au niveau de la seconde surface d'injection (17), lequel est configuré pour injecter, au niveau de la seconde surface d'injection (17), de la lumière (L4) pour l'affichage d'informations sur la surface d'affichage (14), laquelle lumière est déviée au niveau de la surface de réflexion (15) vers la surface d'affichage (14).

8. Dispositif d'affichage selon la revendication précédente,
dans lequel le corps optique (10) présente, dans le troisième plan (13), une surface de bord (18) entourant de manière périphérique, au moins par sections, la seconde surface d'injection (17), laquelle surface de bord recouvre un bord extérieur de l'élément d'affichage (40) et/ou une section de fixation de l'élément d'affichage (40) et/ou un bord extérieur d'un écran (41) de l'élément d'affichage (40) et/ou un bord extérieur d'une section génératrice de lumière de l'élément d'affichage (40) et/ou une section de fixation du corps optique (10).

9. Dispositif d'affichage selon la revendication précédente,
dans lequel le corps optique (10) est pourvu, au niveau de la surface de bord, d'un revêtement (42) non opaque et/ou réfléchissant pour la dissimulation de la surface de bord.

10. Dispositif d'affichage selon la revendication précédente,
dans lequel le revêtement (42) est une couche métallique déposée par évaporation et/ou un résonateur optique formé de plusieurs couches pour le déphasage d'une lumière incidente provenant du corps optique (10) de λ/2 ou d'un multiple de cette valeur.
